# EUROPÄISCHE PATENTANMELDUNG

(11) **EP 2 153 796 A1**
(43) Veröffentlichungstag der Anmeldung: **17.02.2010**
(21) Anmeldenummer: 09010316.9
(22) Anmeldetag: 11.08.2009
(51) Int. Cl.: A61C 8/00

(54) **Heilkappe für ein Zahnimplantat**

(30) Priorität: 14.08.2008 DE 102008037918
(71) Anmelder: Wieland Dental Implants GmbH, 75446 Wiernsheim (DE)
(72) Erfinder: Nolte, Andreas, 48143 Münster (DE)
(74) Vertreter: Lindner, Michael

(57) **Zusammenfassung**

Die Erfindung betrifft eine Heilkappe für ein Zahnimplantat, das eine Bohrung (4) zur rotationsgesicherten Aufnahme eines Zahnimplantat-Aufbaus aufweist, mit einem ersten Längsabschnitt (12), der an die Bohrung des Zahnimplantats angepasst ist, um rotationsgesichert darin aufgenommen zu werden, einem zweiten Längsabschnitt (14), der sich an den ersten Längsabschnitt anschließt und an den Durchmesser des Zahnimplantats angepasst ist, einem dritten Längsabschnitt (16), der sich an den zweiten Längsabschnitt anschließt, und einer Bohrung (28), die die Längsabschnitte durchdringt und zur Aufnahme eines Verbindungsmittels, vorzugsweise einer Schraube, ausgebildet ist, mit welchem die Heilkappe am Zahnimplantat befestigbar ist, **dadurch gekennzeichnet, dass** zumindest der dritte Längsabschnitt (16), vorzugsweise die gesamte Heilkappe (10), aus einem medizinisch zugelassenen Kunststoff-Material gefertigt ist, das einerseits eine materialabhebende Bearbeitung durch einen Zahnarzt und andererseits auch einen Materialauftrag erlaubt, um mit Hilfe dieses dritten Längsabschnitts -in einem in das Zahnimplantat eingesetzten Zustand- die Schleimhaut im Bereich des entsprechenden Zahnimplantats zu gestalten (Fig. 1).

## Beschreibung

Die vorliegende Erfindung betrifft eine Heilkappe für ein Zahnimplantat, das eine Bohrung zur rotationsgesicherten Aufnahme eines Zahnimplant-Aufbaus aufweist, mit einem ersten Längsabschnitt, der an die Bohrung des Zahnimplantats angepasst ist, um rotationsgesichert darin aufgenommen zu werden, einem zweiten Längsabschnitt, der sich an den ersten Längsabschnitt anschließt und an den Durchmesser des Zahnimplantats angepasst ist, einem dritten Längsabschnitt, der sich an den zweiten Längsabschnitt anschließt, und einer Bohrung, die die Längsabschnitte durchdringt und zur Aufnahme eines Verbindungsmittels, vorzugsweise einer Schraube, ausgebildet ist, mit welchem die Heilkappe am Zahnimplantat befestigbar ist.

Heilkappen der vorgenannten Art sind allgemein bekannt. Sie werden üblicherweise nach der ersten Einheilphase des im Kieferknochen eingesetzten Zahnimplantats auf dieses aufgesetzt. Nach einer weiteren Heilphase wird die Heilkappe entfernt und ein Zahnimplantataufbau wird auf das Zahnimplantat gesetzt. Nach einer weiteren Heilphase kann dann schließlich eine Krone bzw. ein künstlicher Zahn auf den Zahnimplantataufbau aufgebracht werden.

Aus der Druckschrift WO 97/20518 A1 ist eine Heilkappe für ein Zahnimplantat bekannt. Diese Heilkappe verfügt über außenliegende Abschrägungen, die zur Konditionierung der Weichteile vorgesehen sind. Insbesondere soll damit eine Konditionierung der Schleimhäute (Zahnfleisch) vorgenommen werden, um später einen besonders guten Übergang von Zahnfleisch zum künstlichen Zahn zu erhalten.

Der Nachteil dieser Heilkappe ist unter anderem darin zu sehen, dass die Konditionierung der Weichteile nur dann optimal erfolgen kann, wenn eine Vielzahl von unterschiedlichen Abschrägungsformen dem Zahnarzt bereitgestellt wird, was jedoch teuer und aufwändig ist.

Vor diesem Hintergrund besteht die Aufgabe der vorliegenden Erfindung darin, die eingangs genannte Heilkappe so weiterzubilden, dass einerseits die Schleimhaut optimal an die Zahnform angepasst werden kann und andererseits eine wenig aufwändige und kostengünstige Lösung bereitgestellt wird.

Diese Aufgabe wird von der eingangs genannten Heilkappe dadurch gelöst, dass zumindest der dritte Längsabschnitt, vorzugsweise die gesamte Heilkappe, aus einem medizinisch zugelassenen Kunststoff-Material gefertigt ist, das einerseits eine materialabhebende Bearbeitung durch einen Zahnarzt und andererseits auch einen Materialauftrag erlaubt, um mit Hilfe dieses dritten Längsabschnitts - in einem in das Zahnimplantat eingesetzten Zustand - die Schleimhaut im Bereich des entsprechenden Zahnimplantats zu gestalten.

Das heißt mit anderen Worten, dass zumindest ein Bereich der Heilkappe für den Zahnarzt mit den vorhandenen Werkzeugen bearbeitbar ist, so dass er die Form, die die Schleimhaut einnehmen soll, individuell vorgeben kann. Der entsprechende dritte Längsabschnitt kann folglich spanabhebend bearbeitet werden, oder auch durch Materialauftrag ergänzt werden. Eine solche individuelle Anpassung des dritten Längsabschnitts war bisher bei den aus Metall gefertigten Heilkappen nicht möglich.

Wie bereits erwähnt, soll der dritte Längsabschnitt aus einem Kunststoff-Material gefertigt sein, der einerseits medizinisch zugelassen ist und andererseits eine materialabhebende Bearbeitung sowie einen Materialauftrag zulässt. Ein solches Material ist beispielsweise Polyetherketone (PEEK) oder Polyoxymethylen (POM).

Diese beiden Materialien haben sich als besonders vorteilhaft herausgestellt, wobei jedoch anzumerken ist, dass andere Materialien, die die vorgenannten Eigenschaften besitzen, ebenfalls einsetzbar sind.

Bei einer bevorzugten Weiterbildung weist der dritte Längsabschnitt eine Außenfläche auf, die gegenüber einer Längsachse der Heilkappe schräg verläuft, insbesondere in einem Winkel von etwa 40°.

Diese spezielle Form hat sich als besonders vorteilhaft herausgestellt, insbesondere im Hinblick auf die spätere Bearbeitung dieses Längsabschnitts. Zum einen besteht die Forderung, eine Form zu schaffen, die viele individuelle an den jeweiligen Patienten angepasste Formen ermöglicht und andererseits so gestaltet ist, dass der Zahnarzt relativ schnell die gewünschte Form herstellen kann.

Bei einer bevorzugten Weiterbildung weist der dritte Längsabschnitt eine - in Draufsicht - im Wesentlichen dreieckige Grundform auf. Der dritte Längsabschnitt kann bevorzugt auch eine im Wesentlichen ovale Grundform oder eine im Wesentlichen rechteckige Grundform aufweisen.

Bei einer bevorzugten Weiterbildung schließt sich an den dritten Längsabschnitt ein vierter Längsabschnitt an, der zylindrisch ausgebildet ist und eine zentrale Bohrung aufweist. Bevorzugt weist dieser vierte Längsabschnitt eine ebene Außenfläche auf, die sich in Längsrichtung erstreckt, vorzugsweise über die gesamte Länge des vierten Längsabschnitts.

Diese Maßnahme hat den Vorteil, dass einerseits eine Rotationssicherung für eine provisorisch aufgesetzte Krone vorhanden ist und andererseits eine virtuelle Zuordnung der Implantatposition mittels eines Scanners ermöglich wird.

Besonders bevorzugt ist es, ein Heilkappen-System bereitzustellen, das zumindest eine Heilkappe mit einer im Wesentlichen dreieckigen Grundform, eine Heilkappe mit einer im Wesentlichen ovalen Grundform und eine Heilkappe mit einer im Wesentlichen rechteckigen Grundform umfasst.

Dieses Heilkappen-System deckt mit drei Grundformen im Wesentlichen alles ab, was ein Zahnarzt benötigt, um eine speziell an einen Patienten angepasste Form des dritten Längsabschnitts mit möglichst geringem Aufwand herzustellen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand eines Ausführungsbeispiels mit Bezug auf die Zeichnung näher erläutert. Dabei zeigen:
- Fig. 1: eine Seitenansicht einer erfindungsgemäßen Heilkappe;
- Fig. 2a-d: verschiedene Ansichten der in Fig. 1 dargestellten erfindungsgemäßen Heilkappe; und
- Fig. 3: zwei verschiedene Ansichten einer Heilkappe gemäß einer zweiten Ausführungsform.

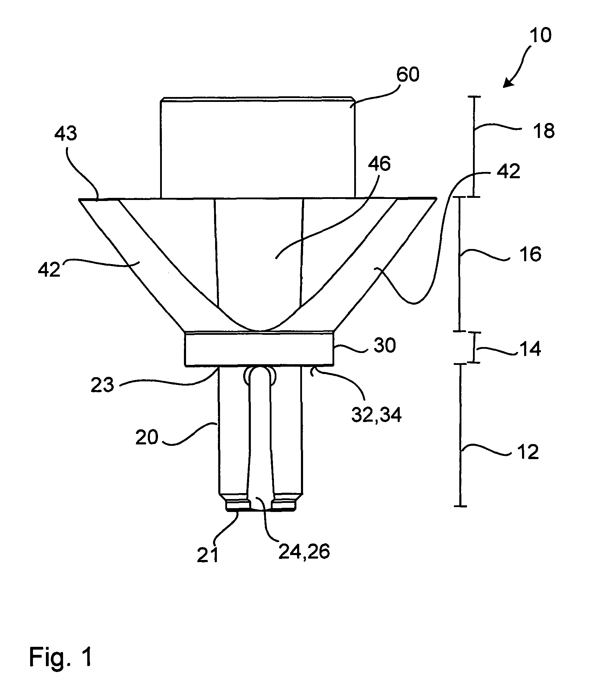

In Fig. 1 ist eine Heilkappe in Seitenansicht dargestellt und allgemein mit dem Bezugszeichen 10 gekennzeichnet. Eine solche Heilkappe wird in ein Zahnimplantat eingesetzt, nachdem dieses im Kieferknochen eingeheilt ist. Die Heilkappe verlängert das Implantat während der weiteren Einheilphase bis zur Oberfläche der Weichgewebe. So erreicht man eine transgingivale Einheilung, obgleich das distale Ende des Zahnimplantats subgingival lokalisiert ist.

Nach einer weiteren Einheilphase wird die Heilkappe entfernt und das sogenannte Abutment in das Zahnimplantat eingeschraubt, wobei das Abutment beispielsweise den künstlichen Zahn trägt.

Die in Fig. 1 gezeigte Heilkappe 10 umfasst einen ersten Längsabschnitt 20, einen zweiten Längsabschnitt 14, einen sich daran anschließenden dritten Längsabschnitt 16 und einen sich daran anschließenden vierten Längsabschnitt 18.

Der erste Längsabschnitt 12 ist dazu vorgesehen, vom Zahnimplantat aufgenommen zu werden. Das bedeutet, dass dieser erste Längsabschnitt 12 an die jeweilige Innengeometrie des Zahnimplantats angepasst sein muss. Im vorliegenden Ausführungsbeispiel ist der Längsabschnitt 12 an ein Zahnimplantat angepasst, wie es beispielsweise in der Druckschrift DE 10 2006 005667 A1 beschrieben ist. Im Hinblick auf den inneren Aufbau eines Zahnimplantats wird der Offenbarungsgehalt dieser Druckschrift durch Bezugnahme zu einem Bestandteil dieser Beschreibung gemacht.

Der erste Längsabschnitt 12 besitzt einen zylindrischen Körper 20, dessen Außendurchmesser an den Innendurchmesser des Zahnimplantats angepasst ist.

Zur Rotationssicherung der Heilkappe im Zahnimplantat besitzt der zylindrische Körper 20 eine Nut 24, die als Rotationssicherung 26 dient. Die Nut 24 erstreckt über die gesamte Länge des zylindrischen Körpers 20 und ist zum proximalen Ende 21 hin offen ausgebildet. Weitere Rotationssicherungen 26 können am Umfang des zylindrischen Körpers 20 je nach Anwendungsfall vorgesehen sein.

An dieser Stelle sei jedoch angemerkt, dass der konkrete Aufbau des ersten Längsabschnitts 12 von der vorliegenden Erfindung unabhängig ist und jeweils an das eingesetzte Zahnimplantat angepasst sein muss. Der hier in Fig. 1 gezeigte Aufbau ist rein beispielhafter Natur.

Am distalen Ende 23 des ersten Längsabschnitts schließt sich der zweite Längsabschnitt 14 an, der als zylindrischer Körper 30 ausgebildet ist, dessen Außendurchmesser jedoch größer ist als der Außendurchmesser des zylindrischen Körpers 20 des ersten Längsabschnitts 12. Dadurch ergibt sich eine Ringfläche 32, die als Auflagefläche 34 auf dem Zahnimplantat bzw. dessen Zahnimplantatschulter dient. Der Außendurchmesser des zylindrischen Körpers 30 ist an den Außendurchmesser des Zahnimplantats angepasst.

An diesen zweiten Längsabschnitt 14 schließt sich der dritte Längsabschnitt 16 an, der grundsätzlich dazu vorgesehen ist, das Zahnfleisch zu formen, bevor später das Abutment mit dem künstlichen Zahn eingesetzt wird. Dieser dritte Längsabschnitt 16 ist aus einem Kunststoff-Material gefertigt, das eine medizinische Zulassung besitzt. Das eingesetzte Kunststoffmaterial muss einerseits eine materialabhebende Bearbeitung durch einen Zahnarzt mit dessen vorhandenen Werkzeugen ermöglichen und andererseits auch einen Materialauftrag erlauben.

Als besonders vorteilhaft hat sich als Material Polyetherketone (PEEK) oder Polyoxymethylen (POM) herausgestellt. Diese Materialien können vom Zahnarzt beschliffen werden sowie durch Materialauftrag ergänzt werden.

Aus Vereinfachungsgründen ist bevorzugt die ganze Heilkappe aus diesem Material gefertigt, wobei dies nicht unbedingt notwendig ist. Darüber hinaus ist es auch denkbar, dass der dritte Längsabschnitt 16 nur im äußeren Bereich aus diesem Kunststoffmaterial besteht und einen Kern besitzt, der aus einem anderen Material gefertigt ist. Wichtig ist, dass die Außenseite des dritten Längsabschnitts 16 in bestimmtem Umfang vom Zahnarzt bearbeitbar ist.

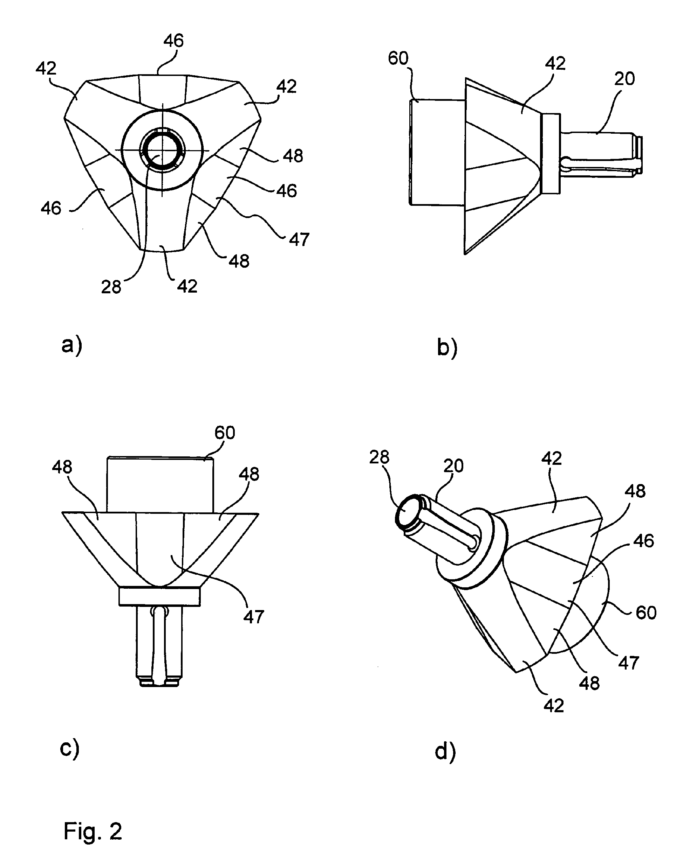

Die Geometrie dieses dritten Längsabschnitts 16 lässt sich anhand der Fig. 1 und 2a-d gut erkennen, so dass nachfolgend auf diese Figuren Bezug genommen wird.

Im Übergangsbereich vom zweiten Längsabschnitt zum dritten Längsabschnitt 16 besitzt dieser einen Außendurchmesser, der dem Außendurchmesser des zylindrischen Körpers 30 entspricht. Von diesem Übergangsbereich von erstem zu zweitem Längsabschnitt erstrecken sich drei Seitenflächen 42, die zueinander in einem Winkel von etwa 120° beabstandet sind und in einem Winkel von ca. 40° zur Längsachse der Heilkappe nach oben und weg von der Längsachse verlaufen. Die drei Seitenflächen 42 enden in einer gemeinsamen Ebene 43, die etwa senkrecht zur Längsachse steht. Die Längserstreckung des dritten Längsabschnitts 16 beträgt etwa 4 mm, wobei sich diese Abmessung selbstverständlich auch ändern kann.

Jeweils zwei nebeneinander liegende Seitenflächen 42 spannen zwischen sich einen Flächenbereich auf, der mit dem Bezugszeichen 46 gekennzeichnet ist. Dieser Zwischenflächenbereich 46 gliedert sich in eine mittlere Zwischenfläche 47 und zwei seitliche bzw. äußere Zwischenflächen 48. Die mittlere Zwischenfläche 47 besitzt eine im Wesentlichen ebene Oberfläche, die sich bis zur Ebene 43 erstreckt.

In der in Fig. 2a gezeigten Ansicht von unten lässt sich gut erkennen, dass der Längsabschnitt 16 eine etwa dreieckige Grundform besitzt.

Neben dieser dreieckigen Grundform kann der dritte Längsabschnitt 16 bevorzugt auch eine ovale und/oder eine quadratische Grundform besitzen. Werden Heilkappen mit diesen drei Grundformen dem Zahnarzt bereitgestellt, kann er quasi jede gewünschte erforderliche Geometrie erstellen, ohne sehr viele Bearbeitungsschritte durchführen zu müssen. Eine der drei Grundformen passt der Erfahrung nach immer recht gut, so dass ein Zahnarzt mit minimalen Bearbeitungsschritten eine Heilkappe individualisieren und in das Zahnimplantat einsetzen kann, die das Zahnfleisch in die gewünschte Form bringt.

An den dritten Längsabschnitt 16 schließt sich der vierte Längsabschnitt 18 an, der als zylindrischer Körper in Form eines Kamins 60 ausgebildet ist.

Aus der Fig. 2d ergibt sich gut, dass die Heilkappe 10 eine Bohrung 28 aufweist, die sich entlang der Längsachse durch alle Längsabschnitte 12 bis 18 erstreckt, so dass die Heilkappe über eine Schraube im Zahnimplantat befestigt werden kann.

Durch die Auswahl eines geeigneten Kunststoffmaterials, vorzugsweise POM oder PEEK, lässt sich eine Heilkappe 10 fertigen, deren dritter Längsabschnitt 16 sich vom Zahnarzt individuell gestalten lässt, wobei durch das Bereitstellen von zumindest zwei bis drei Grundformen im Bereich der dritten Längsabschnitte 16 der Zahnarzt auf nahezu alle anatomischen Gegebenheiten reagieren kann. Der Zahnarzt hat lediglich aus den bereitgestellten Grundformen die der anatomischen Gegebenheit nächstliegende zu nehmen und kann diese dann anschließend durch entsprechende Bearbeitung (materialabtragend und/oder materialauftragend) individualisieren. Das Vorteil einer solchen Individualisierung des dritten Längsabschnitts besteht darin, dass das Zahnfleisch in die gewünschte Form gebracht wird, so dass die spätere Zahnimplantat-Lösung sowohl hohe hygienische als auch ästhetische Anforderungen erfüllt.

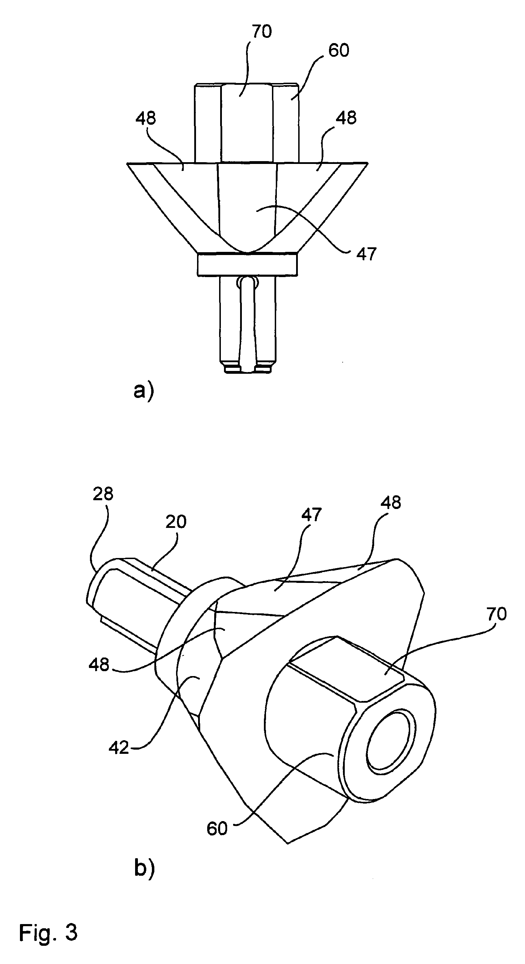

In Fig. 3 ist eine Heilkappe 10 dargestellt, die im vierten Längsabschnitt 18 eine Änderung erfahren hat. Ansonsten entspricht der Aufbau der bereits beschriebenen Heilkappe, so dass auf eine nochmalige Beschreibung der mit gleichen Bezugszeichen gekennzeichneten Teile verzichtet werden kann.

Der Unterschied im vierten Längsabschnitt 18 besteht darin, dass die zylindrische Fläche des Kamins 60 um eine ebene Fläche 70 ergänzt wurde. Diese ebene Fläche verläuft von der Ebene 43 bis zum oberen Ende des Kamins bevorzugt paralell zur Längsachse, wobei die Breite dieser Fläche konstant bleibt. Selbstverständlich ist es auch denkbar, die Breite nach oben hin zu ändern, bspw. zu verringern oder zu vergrößern. Ferner ist es auch denkbar, die ebene Fläche 70 schräg zur Längsachse verlaufen zu lassen, so dass die Fläche von untern nach oben zur Längsachse hin verläuft.

Diese zusätzliche Fläche bietet zwei Funktionen, nämlich einerseits eine Rotationssicherung für provisorisch befestigte Kronen und andererseits ermöglicht sie die virtuelle Zuordnung der Implantatposition mittels eines Scanners (bspw. Laborscanner oder Oralscanner).

Am Ende sei angemerkt, dass die in den Ausführungsbeispielen gezeigtegeometrische Form des dritten Längsabschnitts 16 rein beispielhafter Natur ist und durch andere Formen ersetzt werden kann. Entscheidend ist, dass das Kunststoffmaterial medizinisch zugelassen ist und durch den Zahnarzt bearbeitbar ist. Darüber hinaus soll die gewählte Grundform sich an die anatomischen Gegebenheiten anlehnen.

## Patentansprüche

1. Heilkappe für ein Zahnimplantat, das eine Bohrung (4) zur rotationsgesicherten Aufnahme eines Zahnimplantat-Aufbaus aufweist, mit
- einem ersten Längsabschnitt (12), der an die Bohrung des Zahnimplantats angepasst ist, um rotationsgesichert darin aufgenommen zu werden,
- einem zweiten Längsabschnitt (14), der sich an den ersten Längsabschnitt anschließt und an den Durchmesser des Zahnimplantats angepasst ist,
- einem dritten Längsabschnitt (16), der sich an den zweiten Längsabschnitt anschließt, und
- einer Bohrung (28), die die Längsabschnitte durchdringt und zur Aufnahme eines Verbindungsmittels, vorzugsweise einer Schraube, ausgebildet ist, mit welchem die Heilkappe am Zahnimplantat befestigbar ist,
**dadurch gekennzeichnet, dass**
zumindest der dritte Längsabschnitt (16), vorzugsweise die gesamte Heilkappe (10), aus einem medizinisch zugelassenen Kunststoff-Material gefertigt ist, das einerseits eine materialabhebende Bearbeitung durch einen Zahnarzt und andererseits auch einen Materialauftrag erlaubt, um mit Hilfe dieses dritten Längsabschnitts -in einem in das Zahnimplantat eingesetzten Zustand- die Schleimhaut im Bereich des entsprechenden Zahnimplantats zu gestalten.

2. Heilkappe nach Anspruch 1, **dadurch gekennzeichnet, dass** das Material Polyetherketone (PEEK) ist.

3. Heilkappe nach Anspruch 1, **dadurch gekennzeichnet, dass** das Material Polyoxymethylen (POM) ist.

4. Heilkappe nach einem der vorhergehenden Ansprüche, **dadurch gekennzeichnet, dass** der dritte Längsabschnitt (19) eine Außenfläche (42) aufweist, die gegenüber einer Längsachse - einer Geraden oder einem Radius- der Heilkappe schräg verläuft, insbesondere in einem Winkel von etwa 40°.

5. Heilkappe nach einem der Ansprüche 1 bis 3, **dadurch gekennzeichnet, dass** der dritte Längsabschnitt (16) eine Außenfläche (42) aufweist, die schräg zu der Längsachse der Keilkappe und -vom zweiten Längsabschnitt aus betrachtet- weg von der Längsachse verläuft.

6. Heilkappe nach einem der vorhergehenden Ansprüche, **dadurch gekennzeichnet, dass** sich an den dritten Längsabschnitt (16) ein vierter Längsabschnitt (18) anschließt, der zylindrisch ausgebildet ist und eine zentrale Bohrung (28) aufweist.

7. Heilkappe nach Anspruch 6, **dadurch gekennzeichnet, dass** der vierte Längsabschnitt eine ebene Außenfläche (70) aufweist, die sich in Längsrichtung erstreckt, vorzugsweise über die gesamte Länge des vierten Längsabschnitts.

8. Heilkappe nach einem der Ansprüche 1 bis 7, **dadurch gekennzeichnet, dass** der dritte Längsabschnitt (16) eine -in Draufsicht- im wesentlichen dreieckige Grundform aufweist.

9. Heilkappe nach einem der Ansprüche 1 bis 7, **dadurch gekennzeichnet, dass** der dritte Längsabschnitt (16) eine -in Draufsicht- im wesentlichen ovale Grundform aufweist.

10. Heilkappe nach einem der Ansprüche 1 bis 7, **dadurch gekennzeichnet, dass** der dritte Längsabschnitt (16) eine -in Draufsicht- im Wesentlichen rechteckige Grundform aufweist.

11. Heilkappen-System mit zumindest einer Heilkappe (10) nach Anspruch 8 und zumindest einer weiteren Heilkappe nach Anspruch 9 und/oder 10.
